# EUROPÄISCHE PATENTANMELDUNG

(11) **EP 2 386 196 A1**
(43) Veröffentlichungstag der Anmeldung: **16.11.2011**
(21) Anmeldenummer: 11401507.6
(22) Anmeldetag: 06.05.2011
(51) Int. Cl.: A01B 29/00

(54) **Landwirtschaftliche Vorrichtung zum Verfestigen des Bodens**

(30) Priorität: 11.05.2010 DE 102010016873
(71) Anmelder: Amazonen-Werke H. Dreyer GmbH & Co. KG, 49205 Hasbergen (DE)
(72) Erfinder: Randasch, Holger, 04229 Leipzig (DE); Thielicke, René, 06246 Bad Lauchstädt (DE); Markow, Alexander, 04178 Leipzig (DE)

(57) **Zusammenfassung**

Vorrichtung zum Verfestigen des Bodens mittels walzenförmiger und/oder radförmiger, parallel zueinander auf einer Achse (3) befestigter Werkzeugelemente, die eine im wesentlichen ringförmige, unterbrochene oder ununterbrochene Umfangsfläche haben und von der Achse (3) ausgehende, mit der Umfangsfläche verbundene und/oder zusammenwirkenden Tragarme (4) und/oder Speichen aufweisen. Um eine verbesserte Anordnung der Speichen und/oder Tragarme (4) der Vorrichtung zum Verfestigen des Bodens in einfacher Weise zu schaffen, dass die Tragarme (4) und/oder Speichen gegenüber der Radialen in Bezug auf die Drehrichtung der Werkzeugelemente nacheilend angeordnet sind.

## Beschreibung

Die Erfindung betrifft eine Vorrichtung zum Verfestigen des Bodens gemäß des Oberbegriffes des Patentanspruches 1.

Eine derartige Vorrichtung zum Verfestigen des Bodens ist beispielsweise durch die DE 20 2009 006 698 U1 bekannt. Diese Vorrichtung ist als sogenannte Federbandwalze ausgebildet. Die Walze weist einen zentralen rohrförmigen Zentralträger auf. Auf diesem Zentralträger sind sich in radialer Richtung erstreckende Speichen angeordnet. Die Speichen weisen an ihren Enden nach außen offene U-förmige Aufnahmen auf. In diesen Aufnahmen ist das so genannte ringförmige Federband, welches als Walzenkörper dient, angeordnet.

Eine weitere Vorrichtung zur Bodenbearbeitung ist durch die EP 0 730 818 B1 bekannt. Diese Vorrichtung weist ebenfalls einen zentralen rohrförmigen Zentralträger auf, auf welchen mittels einer Klemmverbindung sich in radialer Richtung erstreckende speichenförmige Bodenbearbeitungswerkzeuge angeordnet sind.

Der Erfindung liegt die Aufgabe zugrunde, eine verbesserte Anordnung der Speichen und/oder Tragarme der Vorrichtung zum Verfestigen des Bodens in einfacher Weise zu schaffen.

Diese Aufgabe wird erfindungsgemäß dadurch gelöst, dass die Tragarme und/oder Speichen gegenüber der Radialen in Bezug auf die Drehrichtung der Werkzeugelemente nacheilend angeordnet sind.

Infolge dieser Maßnahmen wird der Schaufeleffekt der Tragarme und/oder Speichen minimiert. Die Speichen und/oder Tragarme stechen weicher in den Boden ein und können aufgrund ihrer Anwendung gegenüber der Radialen in nacheilender Weise nur noch wenig Boden aufwerfen. Weiterhin wird durch die von der Radialen abweichende Anstellung der Speichen und/oder Tragarme eine Federwirkung der Tragarme und/oder Speichen erreicht. Durch diese Federwirkung, die durch die erfindungsgemäße Anstellung der Speichen und/oder Tragarme erreicht wird, läuft die Walze ruhiger und überträgt nur noch wenige Stöße an die zugeordnete Maschine. Die Gegenwirkung der Speichen und/oder Tragarme passt sich so an den Druck des Bodens bzw. des Gerätes an. Die Belastung der Speichen und oder/Tragarme auf die Oberfläche des zentralen Tragrohres wird so reduziert.

Eine vorteilhafte Anstellung der Speichen und/oder Tragarme zur Radialen wird dadurch erreicht, dass die Nacheilung gegenüber der Radialen, die durch den Schnittpunkt der Längslinie der Tragarme und/oder Speichen mit der Drehachse der Vorrichtung verläuft, zwischen 5 und 70°, vorzugsweise zwischen 10 und 50° beträgt.

Um eine Schaufelwirkung zu vermeiden, d.h. dass die Speichen und oder Tragarme nur wenig Boden aufnehmen können, ist vorgesehen, dass die Tragarme und/oder Speichen gegenüber der Radialen nacheilend angewinkelt angeordnet sind.

Bei einer Vorrichtung, die einen drehbar angeordneten Zentralträger, an dem die Tragarme und/oder Speichen angeordnet sind, aufweist, ist vorgesehen, dass die Tragarme und/oder Speichen mittels einer Klemmverbindung auf dem Zentralträger angeordnet sind, dass die Tragarme und/oder Speichen jeweils einen zu dem Zentralträger komplementäre Form aufweisenden Klemmabschnitt, der dem Profil des Zentralträgers angepasst ist, aufweisen, dass sich an den Klemmabschnitt jeweils die Tragarme und/oder Speichen anschließen. Mittels dieser Maßnahmen lassen sich die Speichen und/oder Tragarme in einfacher Weise sicher auf dem zentralen Tragrohr befestigen. Hierbei wirkt sich besonders vorteilhaft aus, dass die Speichen und oder Tragarme nacheilend zur Radialen eingestellt sind. Durch diese Anordnung wird für die Druckverteilung, die von den Speichen und/oder Tragarme auf den zentralen Träger ausgeübt wird, aufgeteilt. Darüber hinaus wird die Klemmverbindung zwischen den Klemmabschnitten und dem Zentralträger wesentlich verbessert.

Damit die Speichen und/oder Tragarme in einfacher Weise das Federband aufnehmen können, ist vorgesehen, dass die Tragarme und/oder Speichen an ihrem freien Ende jeweils eine nach außen offene Aussparung, welche der Aufnahme und Führung der ringförmigen als umlaufender Ring ausgebildete Umfangsfläche dient, aufweisen.

Eine einfache Anordnung der Aufnahme- und/oder Führungselemente an den Speichen und/oder Tragarme lässt sich dadurch erreichen, dass die die offene Aussparung aufweisende Aufnahme- und/oder Führungselemente zur Aufnahme und Führung der ringförmige Umfangsfläche an dem freien Ende der Tragarme und/oder Speichen mittels einer Schraubverbindung befestigt sind.

Um eine besonders gute Federwirkung der Speichen und/oder Tragarme sowie eine lange Lebensdauer für diese in einfacher Weise zu erreichen, ist vorgesehen, dass die Tragarme und/oder Speichen mit ihrem Klemmabschnitt aus Federstahl hergestellt sind.

Um die vorteilhafte Wirkung der nacheilend Anstellung der Speichen und/oder Tragarme zur Radialen sicherzustellen, ist vorgesehen, dass die durch die Speichen und/oder Tragarme verlaufende Längsgerade beabstandet zur Drehachse der Vorrichtung und/oder Zentralträgers verläuft, wobei der Abstand mindestens 1 cm, vorzugsweise mehr als 2 cm beträgt.

Weitere Einzelheiten der Erfindung sind der Beispielsbeschreibung und den Zeichnungen zu entnehmen.

Hierbei zeigen
- Fig. 1: die als Bodenwalze ausgebildete Vorrichtung zum Verdichten des Bodens in Ausschnitt und perspektivischer Darstellung,
- Fig. 2: die Bodenwalze in Seitenansicht,
- Fig. 3: ein Klemmelement mit Speichen und/oder Tragarme der Bodenwalze gemäß Fig. 1 und 2 in Seitenansicht,
- Fig. 4: ein Klemmelement mit Speichen und/oder Tragarme der Bodenwalze gemäß Fig. 1 und 2 in perspektivischer Darstellung,
- Fig. 5: eine weitere Bodenwalze in Seitenansicht,
- Fig. 6: ein Klemmelement mit Speichen und/oder Tragarme der Bodenwalze gemäß Fig. 5 in Seitenansicht und
- Fig. 7: ein Klemmelement mit Speichen und/oder Tragarme der Bodenwalze gemäß Fig. 5 in perspektivischer Darstellung.

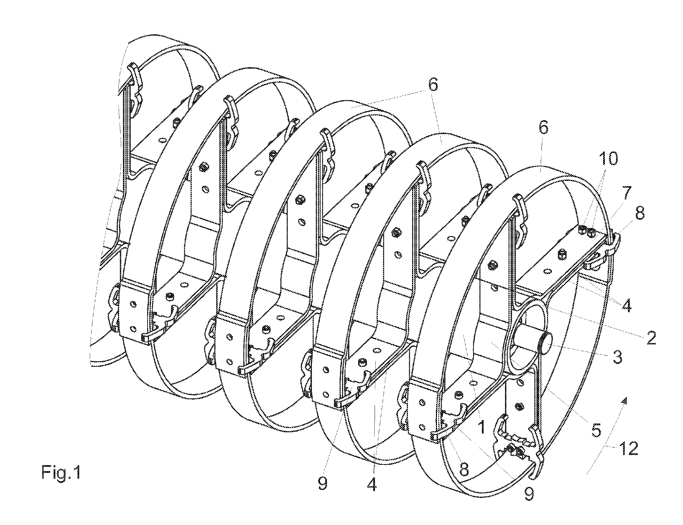

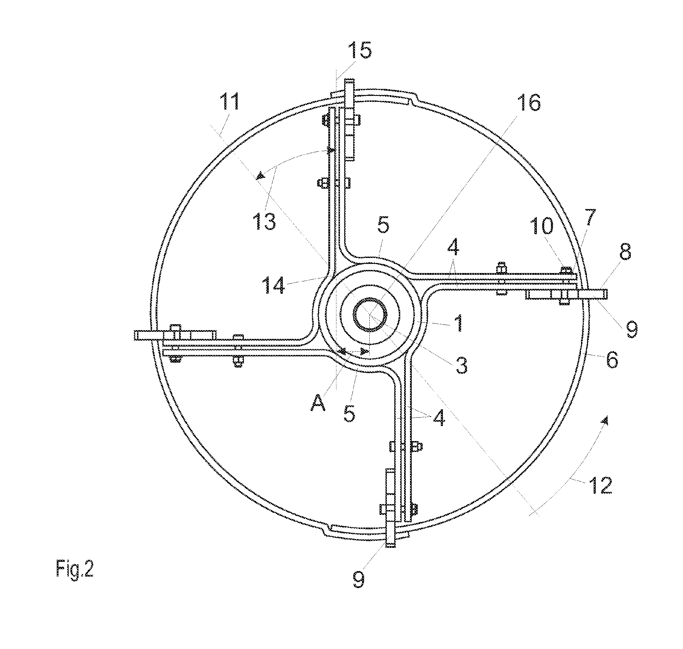

Die Bodenwalze gemäß den Fig. 1 und 2 ist zum Verdichten des Bodens vorgesehen. Die Bodenwalze weist einen rohrförmigen Zentralträger 1 auf. Der Zentralträger 1 trägt an seinen Enden 2 jeweils einen Wellenstummel 3, mittels dem der Zentralträger 1 an einem nicht dargestellten Tragrahmen frei drehbar gelagert ist. Mittels des Tragrahmens ist Bodenwalze an einem vor- oder nach laufendem Gerät in bekannter und daher nicht dargestellter Weise zu befestigen.

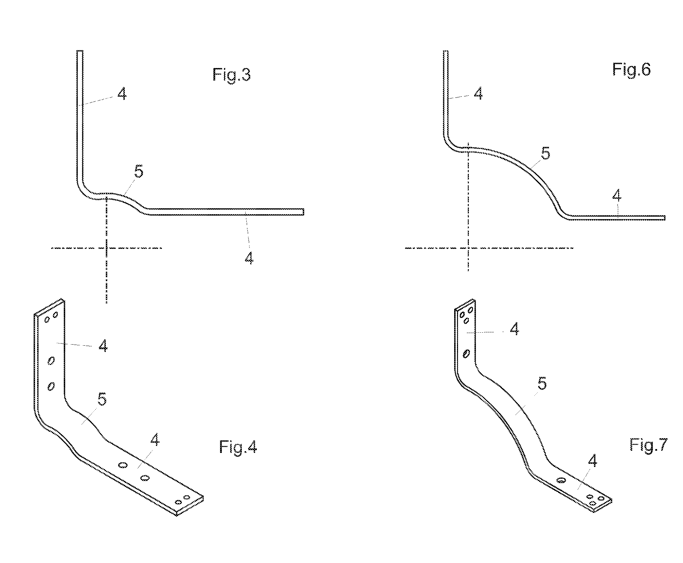

Auf dem Zentralträger 1 sind die Tragarme 4 und/oder Speichen angeordnet. Hierzu weisen die Tragarme oder Speichen 4 jeweils einen zu dem Zentralträger 1 komplementäre Form aufweisenden Klemmabschnitt 5 auf, wie in den Fig. 3 und 4 dargestellt ist. Der jeweilige Klemmabschnitt 5 ist an dem Profil des Zentralträgers 1 angepasst. An dem Klemmabschnitt 5 schließen sich jeweils die Tragarme und/oder Speichen 4 an, wie den Zeichnungen zu entnehmen ist.

Mittels insgesamt vier Klemmabschnitten 5 und zugeordneten Tragarmen 4 und/oder Speichen ist jeweils eine ringförmige als umlaufende Ring 6 ausgebildete Umfangsfläche der Walze zugeordnet. Dieser umlaufende Ring 6 bildet das eigentliche Werkzeugelement zum Verfestigen des Bodens. Zur Aufnahme des Ringes 6 weisen die Tragarme 4 und/oder Speichen an ihrem freien Ende 7 jeweils eine nach außen offene Aussparung 8 auf, welche der Aufnahme und Führung des Ringes 6 dient. Die die eine offene Aussparung 8 aufweisende Aufnahme- und/oder Führungselemente 9 zur Führung und/oder Aufnahme des Ringes 6 sind an dem freien Ende 7 der Tragarme 4 und/oder Speichen mittels einer Schraubverbindung 10 befestigt. Dieser Ring 6 besteht aus einem Federband.

Die Tragarme 4 und oder Speichen wirken mit dem Ring zusammen.

Die Tragarme 4 und/oder Speichen sind gegenüber der Radialen 11 im Bezug auf die Drehrichtung 12 der Werkzeugelemente 4 und 9 der Walze nacheilend angeordnet, wie insbesondere der Fig. 2 zu entnehmen ist. Hierbei beträgt die Nacheilung 13 gegenüber der Radialen 11, die durch den Schnittpunkt 14 der Längslinie 15 der Tragarme 4 und/oder Speichen mit der Drehachse 16 der Vorrichtung verläuft zwischen 5 und 70°, vorzugsweise zwischen 10 und 50°.

Die nacheilend gegenüber der Radialen 11 angewinkelt angeordneten Tragarme 4 und/oder Speichen sind aus Federstahl hergestellt. Dies gilt ebenfalls für den Klemmabschnitt 5.

Die durch die Speichen 4 und oder Tragarme verlaufende Längsgerade 15 verläuft beabstandet zur Drehachse 16 der Vorrichtung und/oder Zentralträger, wobei der Abstand A mindestens 1 cm, vorzugsweise mehr als 2 cm beträgt, wie die Fig. 2 zeigt.

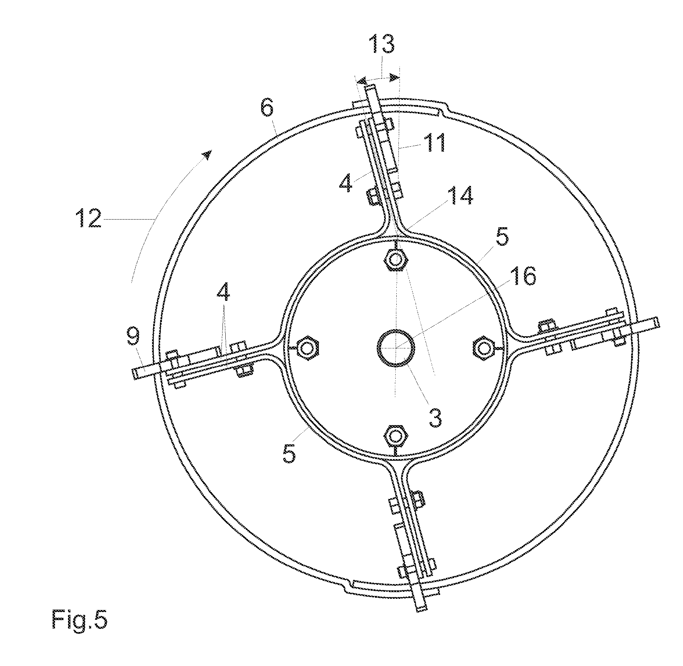

Die Walze gemäß der Fig. 5 mit ihren Speichen 4 und Klemmabschnitten 5 gemäß den Fig. 6 und 7 unterscheidet sich von der Walze gemäß den Fig. 1-4 durch einen größeren Durchmesser des Zentralträgers 1. Die sonstigen Merkmale gelten auch hier.

## Patentansprüche

1. Vorrichtung zum Verfestigen des Bodens mittels walzenförmiger und/oder radförmiger, parallel zueinander auf einer Achse befestigter Werkzeugelemente, die eine im wesentlichen ringförmige, unterbrochene oder ununterbrochene Umfangsfläche haben und von der Achse ausgehende, mit der Umfangsfläche verbundene und/oder zusammenwirkenden Tragarme und/oder Speichen aufweisen, **dadurch gekennzeichnet, dass** die Tragarme (4) und/oder Speichen gegenüber der Radialen (11) in Bezug auf die Drehrichtung (12) der Werkzeugelemente (4, 6) nacheilend angeordnet sind.

2. Vorrichtung nach Anspruch 1, **dadurch gekennzeichnet, dass** die Nacheilung (13) gegenüber der Radialen (11), die durch den Schnittpunkt (14) der Längslinie (15) der Tragarme (4) und/oder Speichen mit der Drehachse (16) der Vorrichtung verläuft, zwischen 5 und 70°, vorzugsweise zwischen 10 und 50° beträgt.

3. Vorrichtung nach zumindest einem der vorstehenden Ansprüche, **dadurch gekennzeichnet, dass** die Tragarme (4) und/oder Speichen gegenüber der Radialen (11) nacheilend angewinkelt angeordnet sind.

4. Vorrichtung nach zumindest einem der vorstehenden Ansprüche, wobei die Vorrichtung einen drehbar angeordneten Zentralträger, an dem die Tragarme und/oder Speichen angeordnet sind, aufweist, **dadurch gekennzeichnet, dass** die Tragarme und/oder Speichen (4) mittels einer Klemmverbindung auf dem Zentralträger (1) angeordnet sind, dass die Tragarme (4) und/oder Speichen jeweils einen zu dem Zentralträger (1) komplementäre Form aufweisenden Klemmabschnitt (5), der dem Profil des Zentralträgers (1) angepasst ist, aufweisen, dass sich an den Klemmabschnitt (5) jeweils die Tragarme (4) und/oder Speichen anschließen.

5. Vorrichtung nach zumindest einem der vorstehenden Ansprüche, **dadurch gekennzeichnet, dass** die Tragarme und/oder Speichen (4) an ihrem freien Ende (7) jeweils eine nach außen offene Aussparung (8), welche der Aufnahme und Führung der ringförmigen als umlaufender Ring (6) ausgebildete Umfangsfläche dient, aufweisen.

6. Vorrichtung nach zumindest einem der vorstehenden Ansprüche, **dadurch gekennzeichnet, dass** die die offene Aussparung (8) aufweisende Aufnahme- und/oder Führungselemente (9) zur Aufnahme und Führung der ringförmigen Umfangsfläche (6) an dem freien Ende (7) der Tragarme und/oder Speichen (4) mittels einer Schraubverbindung (10) befestigt sind.

7. Vorrichtung nach zumindest einem der vorstehenden Ansprüche, **dadurch gekennzeichnet, dass** die Tragarme und/oder Speichen (4) mit ihrem Klemmabschnitt (5) aus Federstahl hergestellt sind.

8. Vorrichtung nach zumindest einem der vorstehenden Ansprüche, **dadurch gekennzeichnet, dass** die durch die Speichen und/oder Tragarme (4) verlaufende Längsgerade (15) beabstandet zur Drehachse (16) der Vorrichtung und/oder Zentralträgers (1) verläuft, wobei der Abstand (A) mindestens 1cm, vorzugsweise mehr als 2 cm beträgt.
